# FASCICULE DE BREVET EUROPEEN

(11) **EP 3 610 534 B1**
(45) Date de publication et mention de la délivrance du brevet: **30.04.2025**
(21) Numéro de dépôt: 18722668.3
(22) Date de dépôt: 30.03.2018
(51) Int. Cl.: H01M 10/625, H01M 10/663, H01M 10/6569, H01M 10/613

(54) **DISPOSITIF DE GESTION THERMIQUE D'UN PACK-BATTERIE**
VORRICHTUNG ZUR TEMPERATURREGELUNG EINER BATTERIEPACKUNG
DEVICE FOR MANAGING THE TEMPERATURE OF A BATTERY PACK

(30) Priorité: 14.04.2017 FR 1753295
(43) Date de publication de la demande: 19.02.2020
(73) Titulaire: Valeo Systemes Thermiques, 78322 Le Mesnil Saint-Denis Cedex (FR)
(72) Inventeur: BENOUALI, Jugurtha, 78322 Le Mesnil Saint-Denis Cedex (FR)
(74) Mandataire: Valeo Systèmes Thermiques
(86) Numéro de dépôt international: PCT/FR2018/050807
(87) Numéro de publication internationale: WO 2018/189449

(56) Documents cités:
- EP-A1- 2 532 544
- DE-A1- 102008 035 216
- FR-A1- 3 028 016

## Description

### Domaine technique de l'invention

La présente invention concerne le domaine des batteries pour véhicule automobile de type électrique ou hybride, et concerne plus particulièrement un dispositif de régulation thermique, et notamment de refroidissement, d'un pack- batterie dans ce type de véhicules.

L'invention concerne également un pack-batterie comprenant un tel dispositif de gestion thermique, et un système de conditionnement thermique d'un véhicule automobile comprenant une branche dédiée au traitement thermique d'un pack-batterie du véhicule.

### Etat de la technique

L'énergie électrique des véhicules à motorisation électrique ou hybride est fournie par une ou plusieurs batteries.

Dans ce type de véhicule, la batterie est généralement formée d'une pluralité de cellules de stockage d'énergie électrique disposées dans un boîtier de protection afin de former ce que l'on appelle un pack-batteries.

Un problème posé réside dans le fait que durant leur fonctionnement, les batteries sont amenées à chauffer et risquent ainsi de s'endommager.

Par ailleurs, en cas de température trop basse, l'autonomie de la batterie peut décroître fortement.

La régulation thermique de la batterie est, par conséquent, un point important.

En effet, la température de la batterie doit rester comprise entre 20°C et 40°C afin d'assurer la fiabilité, l'autonomie, et la performance du véhicule, tout en optimisant la durée de vie de la batterie.

Cette régulation de la température de la batterie, et notamment son refroidissement, est assuré au moyen d'un dispositif de régulation de température.

Un tel dispositif de régulation de température est généralement incorporé à l'intérieur du boîtier du pack-batterie et utilise un fluide caloporteur ou un fluide réfrigérant.

Dans le cas d'un fluide réfrigérant, ce dernier circule dans un ou plusieurs éléments d'échange thermique du type tubes dans lesquels circule le fluide réfrigérant, qui sont placés à l'intérieur du boîtier du pack-batterie, en contact thermique avec les cellules électriques, de manière à réguler leur température par conduction thermique.

Par ailleurs, les véhicules sont fréquemment équipés d'une installation de chauffage, ventilation, et/ou climatisation pour réguler thermiquement l'espace intérieur de l'habitacle du véhicule en délivrant un flux d'air intérieur à température désirée.

Le document DE102008035216 A1 décrit un système de gestion thermique avec un élément de refroidissement de batterie en aval d'un détendeur et en amont d'un échangeur de chaleur.

Le document FR2028016 décrit un système de gestion thermique comportant un premier circuit (A) dit circuit de climatisation dans lequel circule un fluide réfrigérant et un deuxième circuit (B) dit circuit de gestion thermique dans lequel circule un fluide caloporteur, lesdits premier (A) et deuxième (B) circuits comportant un condenseur (30) a double circulation dans lequel circule le fluide réfrigérant et le fluide caloporteur, le circuit (B) pouvant être utilisé pour refroidir des éléments électriques du véhicule.

Le document EP2532544 décrit un dispositif de régulation thermique comportant une banche principale pour l'habitacle et une branche parallèle pour le refroidissement d'un pack-batterie.

Le dispositif de régulation de température dédié à la batterie est fréquemment relié à un circuit de fluide réfrigérant en provenance d'une boucle de climatisation destinée à réguler thermiquement l'espace intérieur de l'habitacle du véhicule en délivrant un flux d'air intérieur à température désirée.

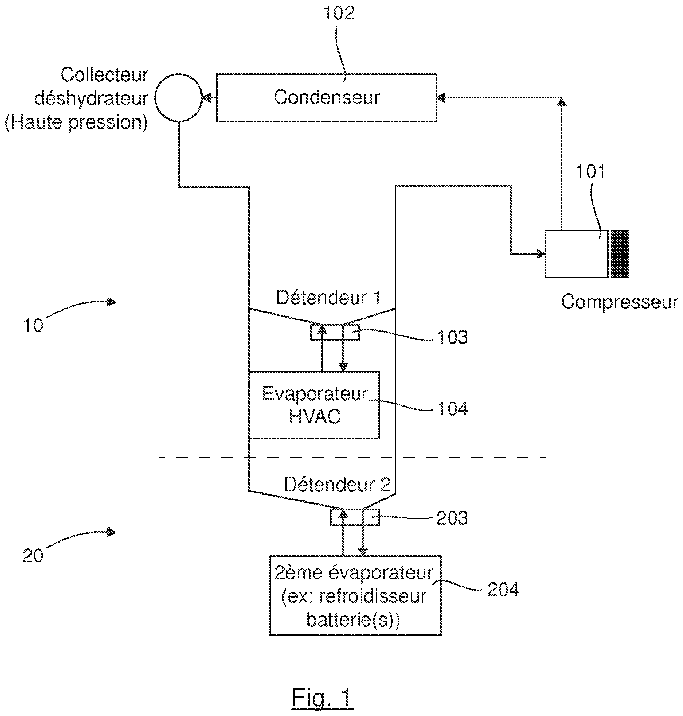

Comme illustré sur la figure 1, le premier circuit, ou boucle de climatisation, 10 dédié à la régulation thermique de l'espace intérieur de l'habitacle et le second circuit 20 dédié à la gestion thermique de la batterie sont disposés en parallèle l'un de l'autre.

Le premier circuit 10 comprend de façon classique un compresseur 101 forçant la circulation de fluide réfrigérant dans cette boucle principale pour qu'il traverse un condenseur 102 avant de traverser un dispositif de détente, ou détendeur, 103 puis un évaporateur 104 permettant de refroidir un air destiné à circuler vers l'habitacle du véhicule, avant d'atteindre à nouveau le compresseur
101. Dans cette boucle principale, le fluide réfrigérant réalise ainsi un cycle thermodynamique dans lequel **il** évacue sa chaleur au niveau du condenseur 102, et dans lequel **il** capte la chaleur au niveau de l'évaporateur 104. Le compresseur 101 est par ailleurs apte à forcer la circulation de fluide réfrigérant dans le second circuit 20 dédié à la gestion thermique de la batterie, et notamment dans au moins un (en l'occurrence un) élément d'échange thermique 204 qui joue un rôle d'évaporateur, de sorte à ce que le fluide réfrigérant puisse absorber la chaleur émise par la batterie afin de la refroidir.

L'évaporateur 204 comprend un faisceau d'échange de chaleur composé de plaques ou de tubes à l'intérieur desquels circule le fluide réfrigérant.

Cet évaporateur 204 peut comporter un certain nombre de passes correspondant au nombre de fois où le fluide réfrigérant traverse le faisceau d'échange de chaleur.

Dans un cycle de refroidissement, en sortie cet évaporateur 204, le fluide réfrigérant est dans un état de vapeur surchauffée. Cette surchauffe est mise en œuvre afin que le fluide réfrigérant à l'état liquide ne pénètre pas dans le compresseur 101 du premier circuit de climatisation 10.

Le fait d'amener le fluide réfrigérant dans un état de vapeur surchauffée s'effectue généralement lors de la dernière passe du fluide réfrigérant au sein de l'évaporateur 204, dite passe de sortie.

Cette surchauffe du fluide réfrigérant entraîne néanmoins une diminution de l'efficacité de l'évaporateur 204 par rapport à sa capacité, car la dernière passe en son sein est dédiée en partie à la surchauffe du fluide réfrigérant.

De plus, le fait de consacrer partiellement cette dernière passe à la surchauffe du fluide réfrigérant entraîne également une inhomogénéité de la température de l'évaporateur 204, cette dernière passe étant partiellement plus chaude.

Le refroidissement de la batterie en contact thermique avec l'évaporateur 204 n'est donc pas uniforme.

Ainsi, un des buts de l'invention est de remédier aux inconvénients de l'art antérieur.

### Résumé de l'invention

L'invention propose à cet effet un pack-batterie pour véhicule automobile comprenant au moins un élément de stockage d'énergie électrique, un boîtier (200) du pack-batterie et un dispositif de gestion thermique d'un pack-batterie pour véhicule automobile comprenant l'élément de stockage d'énergie électrique contenu dans le boitier (200), ledit dispositif de gestion thermique comportant au moins un évaporateur de batterie (204), en contact thermique avec ledit au moins un élément de stockage d'énergie électrique et dans lequel est destiné à circuler un fluide réfrigérant, et un dispositif de détente (203) relie fluidiquement audit au moins un évaporateur de batterie (204), ledit dispositif de gestion thermique étant caractérisé en ce qu'il comprend un échangeur de chaleur interne (205) solidaire du boitier (200) du pack-batterie et destine a surchauffer le fluide réfrigérant sortant dudit au moins un évaporateur de batterie (204), le dispositif de gestion comprenant au sein du boitier plusieurs plaques ou tubes de refroidissement (204'), dans lesquels circule le fluide réfrigérant et formant évaporateur et en ce que le dispositif de détente (203) est localise à l'intérieur du boitier (200).

Selon l'invention, le dispositif de gestion thermique comprend un échangeur de chaleur interne solidaire du boîtier du pack-batterie et destiné à surchauffer le fluide réfrigérant sortant dudit au moins un évaporateur de batterie.

L'invention propose ainsi d'ajouter un échangeur de chaleur interne au sein d'un pack-batterie, ou sur une paroi extérieure de ce dernier, à l'intérieur duquel sont logés un ou plusieurs évaporateurs de batterie en contact thermique avec une ou plusieurs cellules de batterie.

L'échangeur de chaleur interne est relié à la sortie de l'évaporateur de sorte à assurer la surchauffe du fluide réfrigérant.

Par conséquent, du fait que l'évaporateur n'est plus utilisé pour réaliser la surchauffe du fluide réfrigérant, on a une meilleure homogénéité de température sur toute la surface de l'évaporateur pour le refroidissement de la batterie au contact de ce dernier.

En d'autres termes, l'évaporateur est plus efficace, du fait que la dernière passe du fluide réfrigérant en son sein n'est plus consacrée à la surchauffe du fluide réfrigérant, mais à un échange d'énergie calorifique standard.

Ceci permet d'uniformiser le refroidissement de la batterie, tout en optimisant le fonctionnement et la durée de vie de la batterie. Selon un aspect particulier de l'invention, le dispositif de détente est situé en aval de l'échangeur de chaleur interne et en amont dudit au moins un évaporateur de batterie selon le sens d'écoulement du fluide réfrigérant.

Selon un aspect particulier de l'invention le dispositif de gestion thermique selon remarquable en ce que le dispositif de détente est situé en aval de l'échangeur de chaleur interne et en amont dudit au moins un évaporateur de batterie selon le sens d'écoulement du fluide réfrigérant, et en ce que qu'il comprend un bloc de distribution et en ce que le dispositif de détente alimente en fluide réfrigérant les différentes plaques ou tubes de refroidissement via le bloc de distribution.

Selon un aspect particulier de l'invention, le dispositif comprend en outre un compresseur et un condenseur placé en aval dudit compresseur, l'échangeur de chaleur interne étant placé en aval du condenseur et en amont du compresseur, et étant relié d'une part à une sortie de fluide réfrigérant du condenseur et d'autre part à une entrée de fluide réfrigérant du compresseur.

On ajoute ainsi un échangeur de chaleur interne placé en amont du détendeur affecté à l'évaporateur de batterie sur le conduit de fluide réfrigérant en provenance du condenseur, et en amont du compresseur sur le conduit de fluide réfrigérant en provenance de l'évaporateur.

Ainsi, le fluide réfrigérant en provenance de l'évaporateur de batterie passe par l'échangeur de chaleur interne avant de rejoindre l'entrée de fluide réfrigérant du compresseur.

L'ajout d'un échangeur de chaleur interne permet une surchauffe avant l'entrée dans le compresseur et une augmentation de la puissance de l'évaporateur de batterie (du fait de la diminution de la température du fluide haute pression sortant du condenseur, avant l'entrée du détendeur affecté à l'évaporateur de batterie).

Dans un mode de réalisation particulier de l'invention, l'échangeur de chaleur interne est localisé à l'intérieur du boîtier.

Dans une variante, l'échangeur de chaleur interne est monté sur au moins une paroi extérieure dudit boîtier.

Dans un autre mode de réalisation particulier de l'invention, le dispositif de détente est monté sur une paroi extérieure dudit boîtier. L'échangeur de chaleur interne est, par exemple, vissé ou clippé sur au moins une paroi intérieure ou extérieure du boîtier du pack-batterie.

De façon avantageuse, le dispositif de détente est un détendeur thermostatique, un détendeur électronique ou un orifice tube.

L'invention concerne également un système de conditionnement thermique d'un véhicule automobile comprenant :
- une boucle de climatisation dans laquelle circule un fluide réfrigérant et comprenant un compresseur, un condenseur, et un évaporateur d'habitacle permettant de refroidir un air destiné à circuler vers l'habitacle du véhicule,
- une branche dédiée à la gestion thermique d'au moins un élément de stockage d'énergie électrique d'un pack-batterie du véhicule et comprenant au moins un évaporateur dans lequel est destiné à circuler un fluide réfrigérant apte à échanger thermiquement avec ledit au moins un élément de stockage d'énergie électrique, dit évaporateur de batterie, et un dispositif de détente relié fluidiquement audit au moins un évaporateur de batterie, ladite branche comprenant un échangeur de chaleur interne solidaire du boîtier du pack- batterie et destiné à surchauffer le fluide réfrigérant sortant dudit au moins un évaporateur de batterie.

### Description des figures

D'autres caractéristiques et avantages de l'invention apparaîtront plus clairement à la lecture de la description suivante, donnée à titre d'exemple illustratif et non limitatif, et des dessins annexés, parmi lesquels :
la figure 1 montre une représentation schématique générale d'un système de conditionnement thermique d'un véhicule automobile électrique ou hybride selon l'art antérieur ; la figure 2 montre une représentation schématique d'un système de conditionnement thermique d'un véhicule automobile électrique ou hybride dans lequel est mis en œuvre un dispositif de régulation thermique d'un pack- batterie selon l'invention ;
- la figure 3 montre une représentation schématique générale d'un pack-batterie et d'un dispositif de régulation thermique de batterie conforme à l'invention ;
- la figure 4 montre une représentation schématique générale d'un pack-batterie et d'un dispositif de régulation thermique de batterie selon l'invention
- la figure 5 montre une représentation schématique générale d'un pack-batterie et d'un dispositif de régulation thermique de batterie selon un autre mode de réalisation ne faisant pas partie de l'invention.

### Description détaillée de l'invention

Dans la présente description, on entend par "batterie" un ensemble de cellules de stockage d'énergie électrique reliées électriquement entre elles de façon à créer un générateur électrique de tension et de capacité désirée, mais pourrait le cas échéant ne comprendre qu'une seule cellule de stockage d'énergie électrique.

Ces cellules de stockage d'énergie électrique formant la batterie sont positionnées dans un boîtier de protection forment ce que l'on appelle un pack- batterie.

Par ailleurs, on entend par « placé en amont » qu'un élément est placé avant un autre par rapport au sens de circulation du fluide frigorigène ou caloporteur.

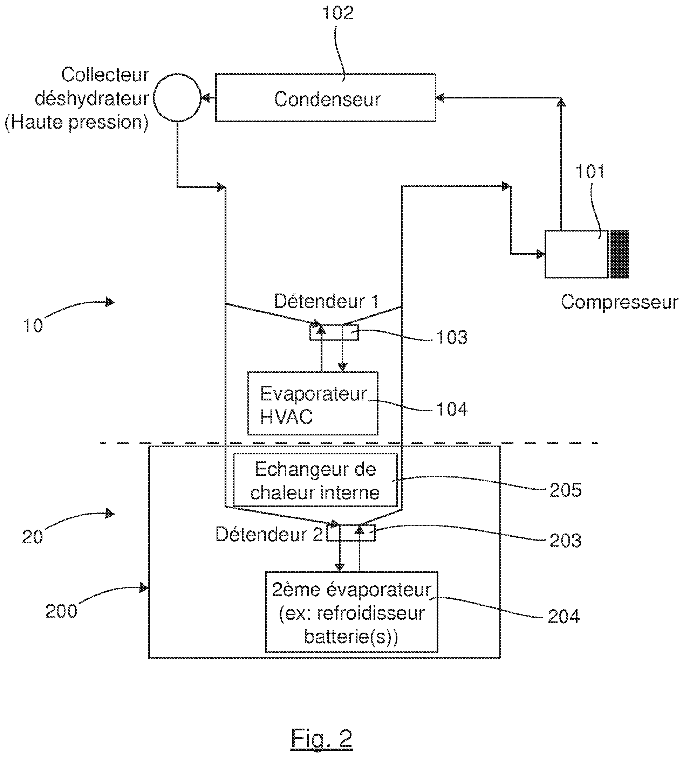

A contrario, on entend par « placé en aval » qu'un élément est placé après un autre par rapport au sens de circulation du fluide frigorigène ou caloporteur. On a représenté, sur la figure 2, un système de conditionnement thermique d'un véhicule automobile de type électrique ou hybride, qui est équipé d'une batterie pour sa propulsion.

Ce système de conditionnement thermique conforme à l'invention comprend une première boucle de climatisation 10 pour réguler thermiquement l'espace intérieur de l'habitacle du véhicule en délivrant un flux d'air intérieur à température désirée et dans laquelle circule un fluide réfrigérant.

Cette première boucle de climatisation 10 comprend principalement un compresseur 101 forçant la circulation de fluide réfrigérant dans cette boucle pour qu'il traverse un condenseur 102 placé en aval dudit compresseur 101, avant de traverser un organe de détente ou détendeur 103 affecté à un évaporateur 104, dit évaporateur d'habitacle, qui est placé en aval dudit condenseur 102 et qui permet de refroidir un air destiné à circuler vers l'habitacle du véhicule,

Dans cette première boucle de climatisation, le fluide réfrigérant réalise ainsi un cycle thermodynamique dans lequel il évacue sa chaleur au niveau du condenseur 102, et dans lequel il capte la chaleur au niveau de l'évaporateur 104.

Comme cela est illustré sur la figure 2, le compresseur 101 est par ailleurs apte à forcer la circulation de fluide réfrigérant dans un second circuit, ou branche, 20 dédié à la gestion thermique de la batterie du véhicule, et notamment dans au moins un (en l'occurrence un) élément d'échange thermique qui joue un rôle d'évaporateur 204, de sorte à ce que le fluide réfrigérant puisse absorber la chaleur émise par la batterie afin de la refroidir.

La batterie (non représentée) est logée dans un boîtier 200 formant ainsi un pack-batterie.

L'évaporateur 204 comprend un faisceau d'échange de chaleur composé de plaques ou de tubes à l'intérieur desquels circule le fluide réfrigérant. Cet évaporateur 204 peut comporter un certain nombre de passes correspondant au nombre de fois où le fluide réfrigérant traverse le faisceau d'échange de chaleur.

Le dispositif de régulation thermique de la batterie comprend donc l'évaporateur 204 apte à échanger thermiquement avec la batterie du véhicule, un échangeur de chaleur interne 205 disposé au sein du boîtier 200 dans cet exemple et un dispositif de détente 203 affecté à l'évaporateur 204 situé en aval de l'échangeur de chaleur interne 205 et en amont de l'évaporateur 204.

L'évaporateur 204 dédié à la batterie est donc relié à un circuit transportant le fluide réfrigérant en provenance de la boucle de climatisation 10.

L'échangeur de chaleur interne 205 et l'évaporateur 204 de batteries sont raccordés en parallèle à l'évaporateur 104 d'habitacle.

L'échangeur de chaleur interne 205 est placé en aval du condenseur 102 et en amont du compresseur 101, et est relié d'une part à une sortie de fluide réfrigérant du condenseur 102 et d'autre part à une entrée de fluide réfrigérant du compresseur 101.

L'échangeur de chaleur interne 205 permet un échange de calories entre le fluide réfrigérant en provenance du condenseur 102 et le fluide réfrigérant en provenance de l'évaporateur 204 de batterie.

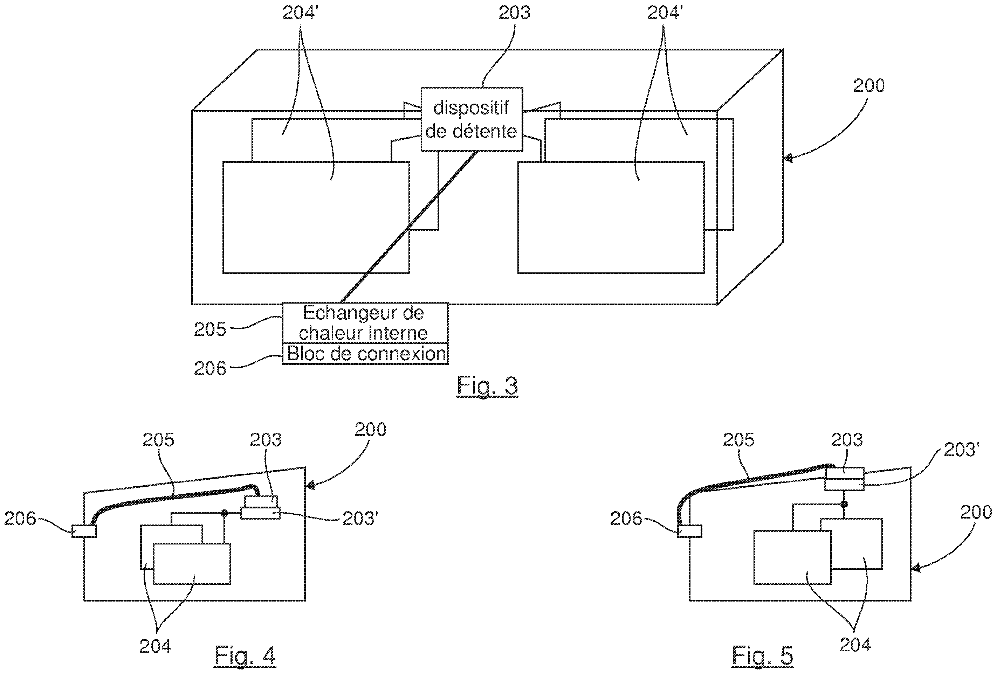

Dans le mode de réalisation illustré sur la figure 3, le circuit de régulation thermique refroidit les cellules de batterie (non représentées) au moyen de plusieurs plaques ou tubes, d'échange thermique, en l'occurrence de refroidissement 204', dans lesquelles circule le fluide réfrigérant et formant évaporateur.

Selon l'exemple de réalisation présenté, quatre plaques ou séries de tubes, de refroidissement 204' sont disposées verticalement au sein du boîtier 200 au contact direct ou non des cellules pour les refroidir par conduction thermique. Toutefois, elles pourraient être disposées au fond du boîtier 200 de sorte que les cellules de batterie reposent sur chacune des plaques de refroidissement 204'.

Les échanges thermiques entre la batterie et le dispositif de régulation thermique se font donc au niveau des plaques/ tubes de refroidissement 204'.

Le nombre de plaques/tubes de refroidissement 204' n'est pas limité à celui illustré.

Dans ce mode de réalisation, l'échangeur de chaleur interne 205 est disposé à l'interface du boîtier 200, en aval d'un bloc de connexion 206 au circuit de climatisation, et est relié à l'organe de détente 203 qui alimente en fluide réfrigérant les différentes plaques/tubes de refroidissement 204' via un bloc de distribution (représenté sur les figures 4 et 5).

Lors du fonctionnement du dispositif de régulation thermique de la batterie, le fluide réfrigérant en phase gazeuse est comprimé par le compresseur 101 et circule vers le condenseur 102 pour son passage au moins en partie en phase liquide.

Le fluide réfrigérant est ensuite détendu par l'organe de détente 203 et circule vers l'évaporateur 204 de batterie.

En sortie de l'évaporateur 204 de batterie, le fluide réfrigérant est surchauffé par l'échangeur de chaleur interne 205 où **il** se transforme en phase gazeuse pour éviter l'absorption de liquide par le compresseur 101 et augmenter la durée de vie de ce dernier.

Il n'y a donc pas de surchauffe à générer/gérer dans l'évaporateur 204 de batterie, constitué d'une ou plusieurs plaques/tubes de refroidissement, et donc pas de fluide réfrigérant en phase gazeuse dans ces plaques/tubes ce qui optimise l'efficacité de l'échange thermique des plaques/tubes de refroidissement avec la batterie. Selon diverses variantes, l'organe de détente est un détendeur thermostatique, un détendeur électronique ou un orifice tube (également appelé orifice calibré). Alors que dans les solutions de l'art antérieur, cet organe de détente est disposé sur une paroi du boîtier du pack-batterie, **il** peut être disposé, dans le cadre de l'invention, au sein du boîtier du pack-batterie.

Le compresseur peut être de type mécanique à contrôle interne ou externe, de type électrique ou de type hybride mécanique-électrique.

Dans le mode de réalisation illustré sur la figure 4, l'échangeur de chaleur interne 205, l'organe de détente 203, le bloc de distribution 203' et le ou les évaporateurs 204 sont disposés au sein du boîtier 200 du pack-batterie. Le bloc de connexion 206, qui est une interface présentant une entrée et une sortie de fluide réfrigérant, est relié à l'échangeur de chaleur interne 205 situé en aval.

Dans le mode de réalisation illustré sur la figure 5, l'échangeur de chaleur interne 205 et l'organe de détente 203 sont montés hors du boîtier 200 du pack- batterie sur les parois extérieures de ce dernier. Le bloc de distribution 203' et le ou les évaporateurs 204 sont disposés au sein du boîtier 200. Le bloc de connexion 206 est une interface présentant une entrée et une sortie de fluide réfrigérant, et est relié à l'échangeur de chaleur interne 205 situé en aval.

Dans les modes de réalisation des figures 4 et 5, l'échangeur de chaleur interne 205 est solidaire du boîtier 200. Pour ce faire, **il** est fixé de façon réversible sur ou dans le boîtier 200, par vissage ou clipsage par exemple.

L'échangeur de chaleur interne 205 peut être un échangeur coaxial constitué de deux tubes concentriques ou un échangeur à plaques, par exemple.

Le diamètre externe de l'échangeur coaxial dépend de la puissance à évacuer.

Lorsque cette puissance à évacuer est comprise entre 0 et 2.5 kW, le diamètre extérieur de l'échangeur coaxial est compris entre 8 et 12 mm, de préférence entre 8 et 10 mm. Lorsque la puissance à évacuer est comprise entre 2.5 kW et 5 kW, le diamètre extérieur de l'échangeur coaxial est compris entre 10 et 24 mm, de préférence entre 10 et 20 mm.

Ces dimensions visent à limiter les pertes de charge dans l'échangeur de chaleur interne 205 de type coaxial pour optimiser la performance du dispositif de régulation thermique de la batterie.

L'échangeur de chaleur interne 205 et l'organe de détente 203 peuvent être disposés au sein du pack-batterie ou montés solidaires, de façon réversible, sur une paroi (couvercle ou paroi latérale) du pack-batterie.

Comme décrit précédemment, le fluide réfrigérant circulant à l'intérieur de la ou des plaques/tubes d'échange thermique du dispositif de gestion thermique peut absorber de la chaleur émise par les cellules électriques. Il peut également, si besoin est, apporter de la chaleur pour réchauffer les cellules électriques.

Pour ce faire, la boucle de régulation thermique de la batterie comprend un dispositif de chauffage additionnel, utilisant par exemple des résistances électriques ou des résistances à coefficient de température positif.

Un tel dispositif de chauffage additionnel permet réguler la température des cellules électriques, notamment par des températures basses en hiver, où **il** faut augmenter la température des cellules électriques avant de commencer à les charger.

Ainsi, on voit bien que le dispositif de régulation/gestion thermique selon l'invention permet une meilleure homogénéité de température sur toute la surface de l'évaporateur pour le refroidissement et également d'avoir un évaporateur plus efficace et donc une meilleure gestion de la température du pack batteries.

Le dispositif de régulation/gestion thermique de la batterie conforme à l'invention permet d'optimiser la durée de vie de la batterie, et d'assurer la fiabilité, l'autonomie, et la performance du véhicule. Les fluides réfrigérants utilisés peuvent être un gaz réfrigérant du type R134a, R1234yf, R744 ou équivalent.

On notera que l'évaporateur 204 de batteries étant monté en parallèle par rapport à l'évaporateur 104 d'habitacle, ces deux évaporateurs peuvent fonctionner indépendamment l'un de l'autre.

L'habitacle et le module de batteries peuvent donc être régulés thermiquement de manière indépendante.

Par ailleurs, le circuit 20 dédié à la gestion thermique de la batterie du véhicule peut être mis en œuvre indépendamment d'une boucle de climatisation, et comprendre un compresseur et un condenseur dédiés uniquement audit circuit 20 de gestion thermique de la batterie.

Dans ce cas, l'échangeur de chaleur interne est placé en aval du condenseur et en amont du compresseur, et est relié d'une part à une sortie de fluide réfrigérant du condenseur et d'autre part à une entrée de fluide réfrigérant du compresseur.

La batterie comprend un assemblage de modules, eux-mêmes comprenant un assemblage de cellules électriques en série et/ou en parallèle.

Les cellules électriques peuvent être de type cylindrique, prismatique ou souple (appelées "pouch-cells" en anglais).

Par ailleurs, l'évaporateur de batterie peut être à plaques ou à tubes.

## Revendications

1. Pack-batterie pour véhicule automobile comprenant au moins un élément de stockage d'énergie électrique, un boîtier (200) du pack-batterie et un dispositif de gestion thermique d'un pack-batterie pour véhicule automobile comprenant l'élément de stockage d'énergie électrique contenu dans le boitier (200), ledit dispositif de gestion thermique comportant au moins un évaporateur de batterie (204), en contact thermique avec ledit au moins un élément de stockage d'énergie électrique et dans lequel est destiné à circuler un fluide réfrigérant, et un dispositif de détente (203) relié fluidiquement audit au moins un évaporateur de batterie (204), ledit dispositif de gestion thermique étant **caractérisé en ce qu'**il comprend un échangeur de chaleur interne (205) solidaire du boitier (200) du pack-batterie et destiné à surchauffer le fluide réfrigérant sortant dudit au moins un évaporateur de batterie (204), le dispositif de gestion comprenant au sein du boitier plusieurs plaques ou tubes de refroidissement (204'), dans lesquels circule le fluide réfrigérant et formant évaporateur et **en ce que** le dispositif de détente (203) est localisé à l'intérieur du boitier (200).

2. Pack-batterie selon la revendication 1, **caractérisé en ce que** le dispositif de détente (203) est situé en aval de l'échangeur de chaleur interne (205) et en amont dudit au moins un évaporateur de batterie (204) selon le sens d'écoulement du fluide réfrigérant, et **en ce qu'**il comprend un bloc de distribution (203') et **en ce que** le dispositif de détente (203) alimente en fluide réfrigérant les différentes plaques ou tubes de refroidissement (204') via le bloc de distribution (203'), le bloc de distribution étant situé dans le boîtier.

3. Pack-batterie selon la revendication 1 ou 2, **caractérisé en ce qu'**il comprend en outre un compresseur (101) et un condenseur (102) placé en aval dudit compresseur (101), l'échangeur de chaleur interne (205) étant placé place en aval du condenseur (102) et en amont du compresseur (101), et étant relié d'une part à une sortie de fluide réfrigérant du condenseur (102) et d'autre part à une entrée de fluide réfrigérant du compresseur (101).

4. Pack-batterie selon l'une des revendications 1 à 3, **caractérisé en ce que** l'échangeur de chaleur interne (205) est localisé à l'intérieur du boitier (200).

5. Pack-batterie selon l'une des revendications 1 à 3, **caractérisé en ce que** l'échangeur de chaleur interne (205) est monté sur au moins une paroi extérieure dudit boitier (200).

6. Pack-batterie selon la revendication 5, **caractérisé en ce que** le dispositif de détente (205) est monté sur une paroi extérieure dudit boitier (200).

7. Pack-batterie selon l'une des revendications 1 à 6, **caractérisé en ce que** le dispositif de détente (205) est un détendeur thermostatique, un détendeur électronique ou un orifice tube.

## Patentansprüche

1. Batteriepackung für ein Kraftfahrzeug, beinhaltend mindestens ein Element zur Speicherung elektrischer Energie, ein Gehäuse (200) der Batteriepackung und eine Vorrichtung zur Temperaturregelung einer Batteriepackung für ein Kraftfahrzeug, die das in dem Gehäuse (200) enthaltene Element zur Speicherung elektrischer Energie beinhaltet, wobei die Vorrichtung zur Temperaturregelung mindestens einen Batterieverdampfer (204), der mit dem mindestens einen Element zur Speicherung elektrischer Energie in thermischem Kontakt steht und in dem ein Kältemittel zirkulieren soll, und eine Entspannungsvorrichtung (203), die mit dem mindestens einen Batterieverdampfer (204) fluidisch verbunden ist, beinhaltet, wobei die Vorrichtung zur Temperaturregelung **dadurch gekennzeichnet ist, dass** sie einen internen Wärmeaustauscher (205) beinhaltet, der mit dem Gehäuse (200) der Batteriepackung fest verbunden ist und dazu bestimmt ist, das Kältemittel, das aus dem mindestens einen Batterieverdampfer (204) austritt, zu überhitzen, wobei die Regelungsvorrichtung innerhalb des Gehäuses mehrere Kühlplatten oder -rohre (204') beinhaltet, in denen das Kältemittel zirkuliert und die einen Verdampfer bilden, und dass die Entspannungsvorrichtung (203) im Inneren des Gehäuses (200) untergebracht ist.

2. Batteriepackung nach Anspruch 1, **dadurch gekennzeichnet, dass** sich die Entspannungsvorrichtung (203) gemäß der Strömungsrichtung des Kältemittels stromabwärts des internen Wärmeaustauschers (205) und stromaufwärts des mindestens einen Batterieverdampfers (204) befindet und dass sie einen Verteilerblock (203') beinhaltet und dass die Entspannungsvorrichtung (203) die unterschiedlichen Kühlplatten oder -rohre (204') via den Verteilerblock (203') mit Kältemittel versorgt, wobei sich der Verteilerblock in dem Gehäuse befindet.

3. Batteriepackung nach Anspruch 1 oder 2, **dadurch gekennzeichnet, dass** sie ferner einen Verdichter (101) und einen Verflüssiger (102), der stromabwärts des Verdichters (101) angeordnet ist, beinhaltet, wobei der interne Wärmeaustauscher (205) stromabwärts des Verflüssigers (102) und stromaufwärts des Verdichters (101) angeordnet ist und einerseits mit einem Kältemittelaustritt des Verflüssigers (102) und andererseits mit einem Kältemitteleintritt des Verdichters (101) verbunden ist.

4. Batteriepackung nach einem der Ansprüche 1 bis 3, **dadurch gekennzeichnet, dass** der interne Wärmeaustauscher (205) im Inneren des Gehäuses (200) untergebracht ist.

5. Batteriepackung nach einem der Ansprüche 1 bis 3, **dadurch gekennzeichnet, dass** der interne Wärmeaustauscher (205) an mindestens einer Außenwand des Gehäuses (200) angebracht ist.

6. Batteriepackung nach Anspruch 5, **dadurch gekennzeichnet, dass** die Entspannungsvorrichtung (205) an einer Außenwand des Gehäuses (200) angebracht ist.

7. Batteriepackung nach einem der Ansprüche 1 bis 6, **dadurch gekennzeichnet, dass** die Entspannungsvorrichtung (205) ein thermostatisches Expansionsventil, ein elektronisches Expansionsventil oder eine Drossel ist.

## Claims

1. Battery pack for a motor vehicle comprising at least one electrical energy storage element, a housing (200) of the battery pack and a device for thermal management of a battery pack for a motor vehicle comprising the electrical energy storage element contained in the housing (200), said thermal management device comprising at least one battery evaporator (204), in thermal contact with said at least one electrical energy storage element and in which a refrigerant is intended to circulate, and an expansion device (203) fluidically connected to said at least one battery evaporator (204), said thermal management device being **characterized in that** it comprises an internal heat exchanger (205) rigidly connected to the housing (200) of the battery pack and intended to superheat the refrigerant exiting said at least one battery evaporator (204), the management device comprising, within the housing, several cooling plates or tubes (204'), in which the refrigerant circulates and forming an evaporator, and **in that** the expansion device (203) is located inside the housing (200).

2. Battery pack according to Claim 1, **characterized in that** the expansion device (203) is located downstream of the internal heat exchanger (205) and upstream of said at least one battery evaporator (204) in the flow direction of the refrigerant, and **in that** it comprises a distribution unit (203'), and **in that** the expansion device (203) supplies refrigerant to the various cooling plates or tubes (204') via the distribution unit (203'), the distribution unit being located in the housing.

3. Battery pack according to Claim 1 or 2, **characterized in that** it further comprises a compressor (101) and a condenser (102) placed downstream of said compressor (101), the internal heat exchanger (205) being placed downstream of the condenser (102) and upstream of the compressor (101), and being connected, on the one hand, to a refrigerant outlet of the condenser (102), and, on the other hand, to a refrigerant inlet of the compressor (101).

4. Battery pack according to one of Claims 1 to 3, **characterized in that** the internal heat exchanger (205) is located inside the housing (200).

5. Battery pack according to one of Claims 1 to 3, **characterized in that** the internal heat exchanger (205) is mounted on at least one outer wall of said housing (200) .

6. Battery pack according to Claim 5, **characterized in that** the expansion device (205) is mounted on an outer wall of said housing (200).

7. Battery pack according to one of Claims 1 to 6, **characterized in that** the expansion device (205) is a thermostatic expansion valve, an electronic expansion valve or a tube orifice.
